# FASCICULE DE BREVET EUROPEEN

(11) **EP 4 331 108 B1**
(45) Date de publication et mention de la délivrance du brevet: **30.09.2026**
(21) Numéro de dépôt: 22723575.1
(22) Date de dépôt: 15.04.2022
(51) Int. Cl.: H02P 21/13, H02P 21/14, H02P 21/20, H02P 23/12, H02P 23/14

(54) **PROCEDE DE DETERMINATION DU COUPLE D'UNE MACHINE ELECTRIQUE**
VERFAHREN ZUR BESTIMMUNG DES DREHMOMENTS EINER ELEKTRISCHEN MASCHINE
METHOD FOR DETERMINING THE TORQUE OF AN ELECTRIC MACHINE

(30) Priorité: 26.04.2021 FR 2104317
(43) Date de publication de la demande: 06.03.2024
(73) Titulaire: IFP Energies nouvelles, 92500 Rueil-Malmaison (FR)
(72) Inventeur: NGUYEN, Hoai-Nam, 92852 RUEIL-MALMAISON CEDEX (FR); TRINH, Ngoc-Tu, 92852 RUEIL-MALMAISON CEDEX (FR)
(74) Mandataire: IFP Energies nouvelles
(86) Numéro de dépôt international: PCT/EP2022/060190
(87) Numéro de publication internationale: WO 2022/228923

(56) Documents cités:
- WO-A1-2019/149481
- WO-A1-2020/058131

## Description

### Domaine technique

La présente invention concerne le domaine du contrôle des machines électriques, en particulier le contrôle des machines électriques synchrones à pôles saillants. Ces machines électriques trouvent une application notamment dans le domaine des véhicules automobiles.

Classiquement, une machine électrique comprend un rotor (partie mobile) et un stator (partie fixe). Le rotor est habituellement logé à l'intérieur du stator. Généralement, le stator est de forme annulaire et est logé à l'intérieur d'un support tubulaire pour y être fixé.

Le stator comprend des générateurs de flux magnétique, généralement des bobinages électriques. Ces bobinages sont alimentés par une pluralité (classiquement trois) phases électriques, afin de générer un champ magnétique tournant. De plus, selon le type de machine électrique, notamment pour les machines électriques synchrones à pôles saillants, le rotor peut comprendre des aimants permanents.

Lors du fonctionnement d'une telle machine électrique, les bobinages du stator sont parcourus par un courant électrique pour générer le champ magnétique nécessaire à l'entraînement en rotation du rotor.

Dans le domaine de machines électriques, la machine synchro-réluctante assistée d'aimants permanents est aujourd'hui de plus en plus développée dans de nombreuses applications industrielles en raison de son facteur de puissance, de son efficacité, de sa compacité et de sa capacité à fonctionner à haute vitesse. Grâce à l'aimant permanent dans la construction du rotor, le facteur de puissance est amélioré et les pertes du stator sont considérablement réduites par rapport aux machines synchro-réluctantes. De plus, le couple de réluctance créé dans une telle machine limite le besoin en aimant permanent, qui reste encore onéreux, et rend donc ce type de machine moins chère à produire.

Dans plusieurs applications industrielles, l'information précise du couple est indispensable pour les machines électrique que ce soit pour le contrôle du couple, notamment avec les stratégies MTPA ou MTPV (respectivement de l'anglais « Maximum Torque per Ampere » pouvant être traduit par couple maximum par ampère, et « Maximum Torque per Voltage » pouvant être traduit par couple maximum par volt), pour la validation au banc moteur, pour le diagnostic et la détection des fautes, et aussi pour la surveillance et la sécurité.

### Technique antérieure

Les informations de couple peuvent être obtenues au moyen de mesures par des capteurs de couples, mais ces capteurs sont souvent coûteux, contiennent beaucoup de bruit, et sont difficilement utilisables en temps réel. Le document « P. Sue, D. Wilson, L. Farr, and A. Kretschmar, "High precision torque measurement on a rotating load coupling for power generation operations," in 2012 IEEE International Instrumentation and Measurement Technology Conference Proceedings. IEEE, 2012, pp. 518-523. » décrit une telle détermination du couple au moyen d'un capteur.

Une autre possibilité pour déterminer le couple d'une machine électrique consiste en l'utilisation d'algorithmes qui donnent une estimation du couple à partir d'autres mesures telles que les courants, les tensions et la vitesse de rotation du rotor de la machine électrique. Par exemple, le document « K. C. Yeo, G. Heins, and F. De Boer, "Comparison of torque estimators for pmsm," in 2008 Australasian Universities Power Engineering Conference. IEEE, 2008, pp. 1-6. » décrit une estimation du couple au moyen d'une équation générale de couple, en supposant que les inductances et le flux d'aimant permanent sont tous connus et constants. Cette approche est simple à appliquer, mais son manque de robustesse est un inconvénient majeur en raison de son hypothèse non réaliste (inductance et flux magnétiques connus et constants).

Une autre solution décrite dans le document « J. Xu, S. Panda, Y. Pan, T. Lee, and B. Lam, "Improved pmsm pulsating torque minimization with iterative learning and sliding mode observer," in 2000 26th Annual Conference of the IEEE Industrial Electronics Society. IECON 2000. 2000 IEEE International Conference on Industrial Electronics, Control and Instrumentation. 21st Century Technologies, vol. 3. IEEE, 2000, pp. 1931-1936. » concerne une technique de mode glissant pour faire l'estimation du couple. Toutefois, cette méthode ne concerne que les machines électriques non saillantes, et les inductances de la machine électrique doivent être connues avec précision a priori, ce qui n'est pas toujours facile en pratique.

L'utilisation d'un observateur de flux permet également la détermination du flux. Le document « M. Koteich, "Flux estimation algorithms for electric drives: a comparative study," in 2016 3rd International Conference on Renewable Energies for Developing Countries (REDEC). IEEE, 2016, pp. 1-6. » illustre cette méthode. Un certain nombre d'observateurs de flux sont principalement développés à partir d'un modèle de tension qui comprend l'intégration de signaux de force électromotrice et l'estimation de flux à travers le modèle de courants. En général, la force électromotrice intégrée est traitée par un filtre passe-haut, alors que l'estimation du flux passe à travers un filtre passe-bas. La bonne qualité de l'estimation du flux dépend du choix de la fréquence de coupure, en particulier pour les faibles vitesses de rotation de la machine électrique. Toutefois, un filtre qui peut rapidement atténuer le décalage constant pour des vitesses moyennes et élevées peut être imprécis à faible vitesse et inversement. En outre, la plupart des observateurs du flux en général ont besoin d'informations a priori précises sur les paramètres de la machine électrique tels que la résistance du stator, les inductances et le flux d'aimant permanent. Toutefois, ces paramètres ne sont généralement pas connus exactement dans la réalité, notamment le flux d'aimant permanent en raison du changement de température du rotor et les inductances en raison de saturation magnétique. Par conséquent, il est nécessaire de concevoir un observateur de flux qui prend en compte des incertitudes de paramètres de la machine électrique et aussi des incertitudes des mesures de capteurs.

Il est connu de la demande de brevet WO 2020/058131 A1 un procédé de détermination du flux magnétique φ d'une machine électrique, basé sur des mesures de courants et tensions dans les phases de la machine électrique, sur un modèle dynamique du flux magnétique.

La demande de brevet WO 2019/149481 A1) décrit un procédé de détermination de la force d'excitation exercée par la houle incidente sur un moyen mobile d'un système houlomoteur au moyen d'un modèle de la force de trainée.

### Résumé de l'invention

L'invention a pour but de déterminer de manière précise et robuste le couple d'une machine électrique. Pour cela, la présente invention concerne un procédé de détermination du couple d'une machine électrique, dans lequel on mesure les courants et les tensions, et on détermine la vitesse de rotation électrique du rotor de la machine. Puis, au moyen d'un modèle dynamique du flux magnétique et d'un filtre de Kalman sans parfum, on détermine le flux puis le couple de la machine électrique. L'utilisation d'un filtre de Kalman sans parfum permet de prendre en compte les non linéarités du modèle dynamique du flux magnétique, assurant ainsi une efficacité et une précision de l'observateur sur toute la plage de vitesse de rotation du rotor de la machine électrique.

La présente invention concerne en outre un procédé et un système de contrôle d'une machine électrique, qui met en œuvre le procédé de détermination du couple de la machine électrique.

L'invention concerne un procédé de détermination du couple d'une machine électrique, ladite machine électrique comprenant un rotor, un stator, ledit stator comprenant des bobinages connectés à une pluralité de phases électriques. Pour ce procédé, on met en œuvre les étapes suivantes :
a. On mesure un courant et une tension dans lesdites phases de ladite machine électrique ;
b. On détermine une vitesse de rotation électrique dudit rotor, notamment en fonction d'une vitesse de rotation mécanique dudit rotor ;
c. On construit un modèle dynamique dudit flux magnétique de ladite machine électrique, ledit modèle dynamique dudit flux magnétique étant une équation différentielle dudit flux magnétique qui relie le flux magnétique au courant et à la tension desdites phases de la machine électrique, et à la vitesse de rotation électrique dudit rotor ;
d. On détermine ledit flux magnétique en appliquant un filtre de Kalman sans parfum adaptatif audit modèle dynamique dudit flux magnétique, ledit modèle dynamique de flux magnétique étant appliqué aux mesures de courant et de tension et à la vitesse de rotation électrique déterminée, et la matrice de covariance du bruit du filtre de Kalman sans parfum étant dépendante de ladite vitesse de rotation électrique du rotor ; et
e. On détermine le couple de ladite machine électrique aux moyens desdites mesures de courant et au moyen dudit flux magnétique déterminé.

Selon un mode de réalisation de l'invention, on détermine ladite vitesse de rotation électrique ωₑ dudit rotor par une formule du type ωₑ=Nω avec N le nombre de paires de pôles de la machine électrique et w la vitesse de rotation mécanique dudit rotor.

Conformément à une mise en œuvre, ledit modèle dynamique de flux magnétique s'écrit : $\left\{\begin{matrix}{\dot{ϕ}}_{d} \left(t\right) = - R \left(t\right) {I}_{d} \left(t\right) + {w}_{e} \left(t\right) {ϕ}_{q} \left(t\right) + {V}_{d} \left(t\right) \\ {\dot{ϕ}}_{q} \left(t\right) = - R \left(t\right) {I}_{q} \left(t\right) - {w}_{e} \left(t\right) {ϕ}_{q} \left(t\right) + {V}_{q} \left(t\right)\end{matrix}\right.$ avec R la résistance de la machine électrique, ωₑ la vitesse de rotation électrique, *ϕ_{d}* le flux magnétique direct, *ϕ_{q}* le flux magnétique en quadrature, *ϕ̇_{d}* la dérivée par rapport au temps du flux magnétique direct, *ϕ̇_{q}* la dérivée par rapport au temps du flux magnétique en quadrature, I_{d} le courant direct, I_{q} le courant en quadrature, V_{d} la tension directe, V_{q} la tension en quadrature.

Avantageusement, on détermine ledit couple de la machine électrique au moyen de la formule : ${T}_{e} = \frac{3}{2} N \left({ϕ}_{d}{I}_{d}-{ϕ}_{q}{I}_{q}\right)$ avec *ϕ_{d}* le flux magnétique direct, *ϕ_{q}* le flux magnétique en quadrature, I_{d} le courant direct, I_{d} le courant en quadrature et N le nombre de paires de pôles de ladite machine électrique.

Selon un aspect, on applique ledit filtre de Kalman sans parfum adaptatif à l'équation d'état $\dot{x} \left(t\right) = A \left(t\right) x \left(t\right) + u \left(t\right)$ avec $x \left(t\right) = \left[\begin{matrix}{ϕ}_{d} \left(t\right) \\ {ϕ}_{q} \left(t\right)\end{matrix}\right]$ correspondant à l'état non mesurable, avec *ϕ_{d}* le flux magnétique direct, *ϕ_{q}* le flux magnétique en quadrature, $u \left(t\right) = \left[\begin{matrix}{V}_{d} \left(t\right) - R \left(t\right) {I}_{d} \left(t\right) \\ {V}_{q} \left(t\right) - R \left(t\right) {I}_{q} \left(t\right)\end{matrix}\right]$ correspondant à l'entrée de ladite équation d'état, avec R la résistance de la machine électrique, I_{d} le courant direct, I_{q} le courant en quadrature, V_{d} la tension directe, V_{q} la tension en quadrature, et $A \left(t\right) = \left[\begin{matrix}0 & {w}_{e} \left(t\right) \\ - {w}_{e} \left(t\right) & 0\end{matrix}\right]$ avec ωₑ la vitesse de rotation électrique.

Avantageusement, une fonction qui relie les courants et le flux magnétique est une fonction non linéaire obtenue par une méthode des éléments finis.

Selon un option de réalisation, on détermine ledit flux magnétique au moyen des étapes suivantes :
i. on initialise k=0, le vecteur d'état *x̂ₐ*(0|0) = m(0) et la matrice de covariance *P*(0|0) = *P*₀ ;
ii. à chaque instant k différent de 0, on acquiert lesdites mesures, et on en déduit le vecteur de sortie y(k) ; et
iii. à chaque instant k différent de 0, on détermine ledit flux magnétique au moyen des équations suivantes : $\left\{\begin{matrix}K \left(k\right) = {P}_{xy} {P}_{yy}^{- 1} \\ x \left(\left.k\right|k\right) = x \left(\left.k\right|k-1\right) + K \left(k\right) \left(\left[\begin{matrix}{I}_{d} \left(k\right) , \\ {I}_{q} \left(k\right)\end{matrix}\right]-{m}_{y}\right) \\ P \left(\left.k\right|k\right) = P \left(\left.k\right|k-1\right) - K \left(k\right) {P}_{yy} K {\left(k\right)}^{T}\end{matrix}\right.$
avec K le gain du filtre de Kalman sans parfum adaptatif, P_{xy} une covariance croisée dudit état et desdites mesures, P_{yy} la covariance prédite des mesures, m_{y} la moyenne prédite de la sortie, I_{d} le courant direct, I_{q} le courant en quadrature.

Conformément à une mise en œuvre, ladite machine électrique est une machine électrique synchrone à pôles saillants, de préférence une machine synchro-réluctante assistée d'aimants permanents.

En outre, l'invention concerne un procédé de contrôle d'une machine électrique, pour lequel on met en œuvre les étapes suivantes :
a. On détermine le couple de ladite machine électrique au moyen du procédé de détermination dudit couple selon l'une des caractéristiques précédentes ; et
b. On contrôle ladite machine électrique au moyen dudit couple déterminé.

De plus, l'invention concerne un système de contrôle d'une machine électrique comprenant une machine électrique et un contrôleur pour mettre en œuvre le procédé de contrôle selon l'une des caractéristiques précédentes.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 illustre les étapes du procédé selon un mode de réalisation de l'invention.
La figure 2 illustre les étapes du procédé selon un deuxième mode de réalisation de l'invention.
La figure 3 illustre les courbes du courant, de la vitesse de rotation, d'angle de courant et de la tension en fonction du temps, pour un premier exemple d'application du procédé selon un mode de réalisation de l'invention.
La figure 4 illustre des courbes du couple en fonction du temps pour l'exemple de la figure 3, une première courbe correspondant au couple mesuré, et la deuxième courbe correspondant au couple déterminé par le procédé selon un mode de réalisation de l'invention.
La figure 5 illustre les courbes de courant, de la vitesse de rotation, de déphasage de courant, et de la tension en fonction du temps, pour un deuxième exemple d'application du procédé selon un mode de réalisation de l'invention.
La figure 6 illustre des courbes du couple en fonction du temps pour l'exemple de la figure 5, une première courbe correspondant au couple mesuré, et la deuxième courbe correspondant au couple déterminé par le procédé selon un mode de réalisation de l'invention.

### Description des modes de réalisation

La présente invention concerne un procédé de détermination, en temps réel, du couple d'une machine électrique. La machine électrique comprend un rotor et un stator, ce dernier étant équipé de bobinages connectés à plusieurs phases électriques, par exemple à trois phases électriques pour générer un champ magnétique permettant la rotation du rotor.

Selon un aspect de l'invention, la machine électrique peut être une machine électrique synchrone à pôles saillants. En effet, le procédé est particulièrement adapté à ce type de machine, d'une part, car le modèle dynamique de la machine électrique est bien représentatif de ce type de machine électrique, et car la détermination du couple permet le contrôle d'une telle machine électrique, notamment par un contrôle direct du couple. De préférence, la machine électrique peut être une machine synchro-réluctante assistée d'aimants permanents. En effet, ce type de machine électrique nécessite une information précise de couple, notamment pour leur contrôle, par exemple au moyen d'une stratégie de contrôle de type MTPA et MTPV, pour leur diagnostic et pour leur surveillance.

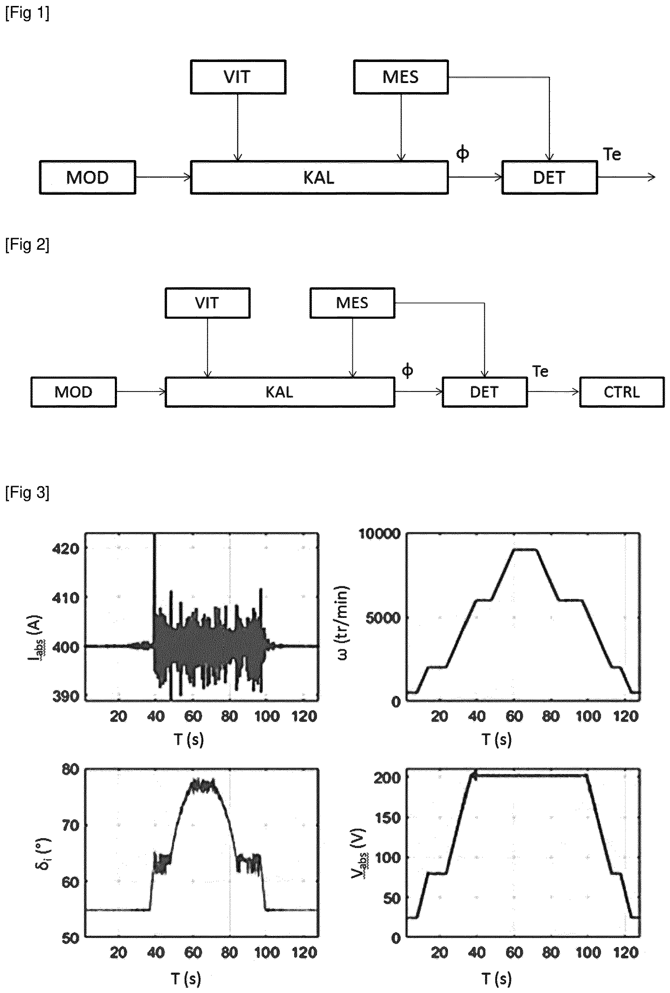

La figure 1 décrit, schématiquement et de manière non limitative, les étapes du procédé selon un mode de réalisation de l'invention. Le procédé de détermination du flux magnétique comprend les étapes suivantes :
1) Mesures des courants et des tensions (MES)
2) Détermination de la vitesse de rotation électrique (VIT)
3) Construction du modèle dynamique de flux magnétique (MOD)
4) Application du filtre de Kalman sans parfum adaptatif (KAL)
5) Détermination du couple de la machine électrique (DET)

Les étapes 1) à 3) sont indépendantes, et peuvent être réalisées dans cet ordre, dans un ordre différent ou simultanément.

L'étape 4) permet de déterminer le flux magnétique *ϕ* de la machine électrique, et l'étape 5) permet de détermine le couple Te de la machine électrique.

Les étapes du procédé peuvent être mises en œuvre par des moyens informatiques, notamment au moyen d'un contrôleur de la machine électrique. Ces étapes seront détaillées dans la suite de la description.

L'invention concerne également un procédé de contrôle d'une machine électrique. Le procédé de contrôle met en œuvre le procédé de détermination du couple selon l'invention et une étape supplémentaire de contrôle de la machine électrique en fonction du couple déterminé. La figure 2 décrit, schématiquement et de manière non limitative, les étapes du procédé selon un deuxième mode de réalisation de l'invention. Dans ce cas, le procédé de contrôle de la machine électrique comprend les étapes suivantes :
1) Mesures des courants et des tensions (MES)
2) Détermination de la vitesse de rotation électrique (VIT)
3) Construction du modèle dynamique de flux magnétique (MOD)
4) Application du filtre de Kalman sans parfum adaptatif (KAL)
5) Détermination du couple de la machine électrique (DET)
6) Contrôle de la machine électrique (CTRL)

Les étapes 1) à 3) sont indépendantes, et peuvent être réalisées dans cet ordre, dans un ordre différent ou simultanément.

L'étape 4) permet de déterminer le flux magnétique *ϕ* de la machine électrique, et l'étape 5) permet de détermine le couple Te de la machine électrique.

Les étapes du procédé peuvent être mises en œuvre par des moyens informatiques, notamment au moyen d'un contrôleur de la machine électrique. Ces étapes seront détaillées dans la suite de la description.

Dans la suite de la description, les dérivées par rapport au temps sont indiquées par un point.

Les notations indexées par la mention *-d* (directe) ou *-q* (quadrature ou « quadratique ») signifient que les grandeurs sont exprimées dans le repère de Park (repère tournant lié au rotor). En outre, les valeurs à l'état initial sont indiquées avec un 0 (t ou k = 0).

### 1) Mesure des courants et des tensions

Lors de cette étape, on mesure les courants et les tensions dans les phases de la machine électrique.

Ces mesures peuvent être réalisées par des capteurs de tension et de courant instrumentant la machine électrique, de manière à mesurer les courants et les tensions dans les phases de la machine électrique.

Avantageusement, les mesures dans les phases peuvent être transformées en mesures dans le repère de Park (repère tournant lié au rotor), de manière à déterminer le courant direct, le courant en quadrature, la tension directe, et la tension en quadrature.

### 2) Détermination de la vitesse de rotation électrique du rotor

Lors de cette étape, il s'agit de déterminer la vitesse de rotation électrique du rotor.

Selon un mode de réalisation de l'invention, la vitesse de rotation électrique ωₑ du rotor peut être déterminée à partir de la vitesse de rotation mécanique du rotor, au moyen de la formule : *ωₑ = Nω*, avec N le nombre de paires de pôles de la machine électrique et ω la vitesse de rotation mécanique dudit rotor.

Conformément à une mise en œuvre de ce mode de réalisation, la vitesse de rotation mécanique du rotor peut être estimée, par toute méthode connue de l'homme du métier. Par exemple, la vitesse de rotation mécanique peut être estimée à partir d'une méthode de type boucle à phase asservie PLL (de l'anglais « phase-locked loop »). En variante, la méthode d'estimation de la vitesse de rotation mécanique peut être conforme à celle décrite dans la demande de brevet FR 2 984 637.

Alternativement, la vitesse de rotation mécanique du rotor peut être mesurée au moyen d'un capteur de vitesse placé sur la machine électrique.

En variante, la vitesse de rotation électrique peut être déterminée directement.

### 3) Construction du modèle dynamique du flux magnétique

Lors de cette étape, on construit un modèle dynamique du flux magnétique de la machine électrique. Le modèle dynamique du flux magnétique électrique est une équation différentielle qui relie le flux magnétique au courant et la tension des phases de la machine électrique, et à la vitesse de rotation électrique du rotor. Le modèle est dit dynamique car il est fonction de la vitesse de rotation du rotor.

Le modèle dynamique du flux magnétique est une représentation d'état de la machine électrique. On rappelle qu'en théorie des systèmes (et en automatique), une représentation d'état permet de modéliser un système dynamique sous une forme matricielle, en utilisant des variables d'état. Cette représentation peut être linéaire ou non, continue ou discrète. La représentation permet de déterminer l'état interne et les sorties du système à n'importe quel instant futur si l'on connaît l'état à l'instant initial et le comportement des variables d'entrée qui influent sur le système.

La dynamique du flux magnétique peut être exprimée par l'équation différentielle suivante : $\left\{\begin{matrix}{\dot{ϕ}}_{d} \left(t\right) = - R \left(t\right) {I}_{d} \left(t\right) + {w}_{e} \left(t\right) {ϕ}_{q} \left(t\right) + {V}_{d} \left(t\right) \\ {\dot{ϕ}}_{q} \left(t\right) = - R \left(t\right) {I}_{q} \left(t\right) - {w}_{e} \left(t\right) {ϕ}_{q} \left(t\right) + {V}_{q} \left(t\right)\end{matrix}\right.$

Avec R la résistance de la machine électrique (pouvant être mesurée au moyen d'un capteur), ωₑ la vitesse de rotation électrique, *ϕ_{d}* le flux magnétique direct, *ϕ_{q}* le flux magnétique en quadrature, *ϕ̇_{d}* la dérivée par rapport au temps du flux magnétique direct, *ϕ̇_{q}* la dérivée par rapport au temps du flux magnétique en quadrature, I_{d} le courant direct, I_{q} le courant en quadrature, V_{d} la tension directe, V_{q} la tension en quadrature.

On peut réécrire cette équation sous une forme vectorielle compacte : $\left[\begin{matrix}{\dot{ϕ}}_{d} \left(t\right) \\ {\dot{ϕ}}_{q} \left(t\right)\end{matrix}\right] = \left[\begin{matrix}0 & {w}_{e} \left(t\right) \\ - {w}_{e} \left(t\right) & 0\end{matrix}\right] \left[\begin{matrix}{ϕ}_{d} \left(t\right) \\ {ϕ}_{q} \left(t\right)\end{matrix}\right] + \left[\begin{matrix}{V}_{d} \left(t\right) - R \left(t\right) {I}_{d} \left(t\right) \\ {V}_{q} \left(t\right) - R \left(t\right) {I}_{q} \left(t\right)\end{matrix}\right]$
ou de la manière suivante : $\dot{x} \left(t\right) = A \left(t\right) x \left(t\right) + u \left(t\right)$
avec x(t) l'état non mesurable défini par $x \left(t\right) = \left[\begin{matrix}{ϕ}_{d} \left(t\right) \\ {ϕ}_{q} \left(t\right)\end{matrix}\right]$
u(t) est l'entrée définie au moyen des mesures par $u \left(t\right) = \left[\begin{matrix}{V}_{d} \left(t\right) - R \left(t\right) {I}_{d} \left(t\right) \\ {V}_{q} \left(t\right) - R \left(t\right) {I}_{q} \left(t\right)\end{matrix}\right]$

A est la matrice dépendante de la vitesse de rotation électrique du rotor et définie par $A \left(t\right) = \left[\begin{matrix}0 & {w}_{e} \left(t\right) \\ - {w}_{e} \left(t\right) & 0\end{matrix}\right]$

Ainsi, l'équation d'état du flux peut décrite par un système linéaire variant dans le temps, Toutefois, l'équation de sortie du flux est non linéaire, étant donné que les courants dépendent du flux. Cette dépendance peut être écrite sous la forme : $\left\{\begin{matrix}{I}_{d} \left(t\right) = {f}_{d} \left({ϕ}_{d}, {ϕ}_{q}\right) \\ {I}_{q} \left(t\right) = {f}_{q} \left({ϕ}_{d}, {ϕ}_{q}\right)\end{matrix}\right.$ où f_{d} et f_{q} sont des fonctions, respectivement direct et en quadrature. Selon un mode de réalisation, les fonctions f_{d} et f_{q} peuvent être déterminées par une méthode des éléments finis FEMM (de l'anglais « Finite Element Method Magnetics »).

Il en résulte qu'il s'agit d'un problème d'estimation non linéaire, étant donné que l'équation de sortie est non linéaire.

### 4) Application du filtre de Kalman sans parfum adaptatif

Lors de cette étape, on détermine le flux magnétique de la machine électrique. Pour cela, on applique un filtre de Kalman sans parfum (UKF de l'anglais « unscented Kalman filter ») adaptatif pour le modèle construit à l'étape 3), appliqué aux mesures de tensions et de courants obtenues à l'étape 1), et à la vitesse de rotation électrique du rotor obtenue à l'étape 2). L'application du filtre Kalman permet d'obtenir un observateur d'état. Le filtre de Kalman sans parfum est un algorithme de filtrage qui utilise un modèle de système pour estimer l'état caché actuel d'un système, puis corrige l'estimation à l'aide des mesures de capteur disponibles. La philosophie de l'UKF diffère du filtre de Kalman étendu en ce sens qu'elle utilise la transformation sans parfum pour approcher directement la moyenne et la covariance de la distribution cible. Le filtre de Kalman sans parfum peut comporter les étapes de prédiction d'état et de correction des mesures, ces deux étapes étant précédées d'une étape préalable pour le calcul des « points sigma ». Les points sigma sont un ensemble d'échantillons calculés de manière à pouvoir propager de manière exacte les informations de moyenne et de variance dans l'espace d'une fonction non linéaire.

Selon l'invention, la matrice de covariance du bruit du filtre de Kalman sans parfum est adaptée en fonction de la vitesse de rotation électrique du rotor. Cette adaptation permet de rendre l'observateur performant (précis et robuste) sur toute la plage de vitesse de rotation de la machine électrique.

De manière avantageuse, le modèle d'état peut s'écrire : $x \left(k+1\right) = A \left(k\right) x \left(k\right) + u \left(k\right)$

Pour ce mode de réalisation, on peut noter : $x \left(\left.k\right|k-1\right)$
est l'estimation de x(k) à partir des mesures du temps k-1. $x \left(\left.k\right|k\right)$
est l'estimation de x(k) à partir des mesures du temps k. $P \left(\left.k\right|k-1\right)$
est la variance d'erreur à partir des mesures du temps k-1. $P \left(\left.k\right|k\right)$
est la variance d'erreur à partir des mesures du temps k.

Conformément à une mise en œuvre de l'invention, on peut déterminer le flux magnétique de la machine électrique au moyen des étapes suivantes :
i) on initialise k=0, le vecteur d'état *x̂ₐ*(0|0)=m(0) et l'état de la matrice de covariance, *P*(0|0) = *P*₀ ;
ii) à chaque instant k, on acquiert les mesures u(k) de la machine électrique ; et
iii) à chaque instant k, on détermine le flux magnétique au moyen des étapes détaillées ci-dessous.

Pour l'estimation d'état donnée *x*(*k* - 1|*k* - 1) et l'estimation de la variance *P*(*k* - 1|*k* - 1) d'erreur donnée , il y a deux étapes dans l'application du filtre de Kalman sans parfum : i) prédiction et ii) correction.

On note Q(ω) la variance de bruit du système, qui dépend de la vitesse de rotation du rotor de la machine électrique. A l'instant k, pour l'étape de prédiction, on peut écrire : $\left\{\begin{matrix}x \left(\left.k\right|k-1\right) = \left.A\left(k\right)x\left(\left.k-1\right|k-1\right)\right| + u \left(k\right) \\ P \left(\left.k\right|k-1\right) = \left.A\left(k\right)P\left(\left.k-1\right|k-1\right)\right| A {\left(k\right)}^{T} + Q \left(w\right)\end{matrix}\right.$

Après l'étape de prédiction, la distribution de x(k) peut être donnée comme une distribution gaussienne 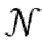 pouvant s'écrire : $x \left(\left.k\right|k-1\right) ∼ N \left({m}_{x}, {P}_{x}\right)$

Avec ${m}_{x} = x \left(\left.k\right|k-1\right) {P}_{x} = P \left(\left.k\right|k-1\right)$

Les points sigma associés à la moyenne mₓ et à la matrice Pₓ peuvent être calculés comme suit : $\left\{\begin{matrix}{χ}_{0} & = {m}_{x} \\ {χ}_{i} & = {m}_{x} + \sqrt{n + λ} {S}_{i} , i = \overline{1 , n} \\ {χ}_{i + n} & = {m}_{x} - \sqrt{n + λ} {S}_{i} , i = \overline{1 , n}\end{matrix}\right.$

Avec n=2, et Si est une racine carrée de Px. Les points sigma se propagent dans le modèle de mesure sous la forme suivante, pour tout i compris entre 0 et 2n : ${y}_{i} \left(k\right) = \left[\begin{matrix}{f}_{d} \left({χ}_{i}\right) , \\ {f}_{q} \left({χ}_{i}\right)\end{matrix}\right]$ les fonctions f_{d} et f_{q} pouvant être celles déterminées par une méthode des éléments finis FEMM. L'étape suivante peut consister à calculer la moyenne prédite m_{y}, la covariance prédite de la mesure P_{yy} et la covariance croisée de l'état de mesure P_{xy} de la manière suivante : $\left\{\begin{matrix}{m}_{y} = {\sum }_{i = 0}^{2 n} {W}_{i}^{m} {y}_{i} \left(k\right) , \\ {P}_{yy} = {\sum }_{i = 0}^{2 n} {W}_{i}^{c} \left({y}_{i}-{m}_{y}\right) {\left({y}_{i}-{m}_{y}\right)}^{T} + {R}_{n} \\ {P}_{xy} = {\sum }_{i = 0}^{2 n} {W}_{i}^{c} \left({χ}_{i}-{m}_{x}\right) {\left({y}_{i}-{m}_{y}\right)}^{T}\end{matrix}\right.$ avec ${W}_{i}^{m}$ et ${W}_{i}^{c}$ les poids de la moyenne prédite et de la covariance prédite, et *Rₙ*la matrice de covariance du bruit de mesure.

Ensuite, le gain du filtre de Kalman, l'estimation de l'état et la matrice de covariance au temps k peuvent être exprimés de la forme suivante : $\left\{\begin{matrix}K \left(k\right) = {P}_{xy} {P}_{yy}^{- 1} \\ x \left(k\left|k\right.\right) = x \left(k\left|k\right.-1\right) + K \left(k\right) \left(\left[\begin{matrix}{I}_{d} \left(k\right) , \\ {I}_{q} \left(k\right)\end{matrix}\right]-{m}_{y}\right) \\ P \left(k\left|k\right.\right) = P \left(k\left|k\right.-1\right) - K \left(k\right) {P}_{yy} K {\left(k\right)}^{T}\end{matrix}\right.$

L'application de ces étapes permet de déterminer l'état x, et par conséquent, le flux magnétique.

### 5) Détermination du couple de la machine électrique

Lors de cette étape, on détermine le couple de la machine électrique au moyen des mesures de courant de l'étape 1) et du flux magnétique déterminé à l'étape 3).

Conformément à une mise en œuvre de l'invention, on peut déterminer le couple Tₑ de la machine électrique par une formule du type :
${T}_{e} = \frac{3}{2} N \left({ϕ}_{d}{I}_{d}-{ϕ}_{q}{I}_{q}\right)$ avec *ϕ_{d}* le flux magnétique direct, *ϕ_{q}* le flux magnétique en quadrature, I_{d} le courant direct, I_{q} le courant en quadrature et N le nombre de paires de pôles de la machine électrique.

Alternativement, cette étape peut mettre en œuvre tout modèle du couple qui relie le couple et le flux magnétique. Ce modèle peut dépendre également de la vitesse de rotation du rotor de la machine électrique et/ou des mesures de tension.

### 6) Contrôle de la machine électrique

Cette étape est facultative.

L'invention concerne également un procédé de contrôle, en temps réel, d'une machine électrique, notamment une machine électrique synchrone, pour lequel on réalise les étapes suivantes :
- on détermine le couple de la machine électrique à l'aide du procédé (étapes 1) à 5)) décrit ci-dessus ; et
- on contrôle le couple de ladite machine synchrone en fonction du couple déterminé. Pour cette étape, on peut utiliser tout moyen classique de contrôle de la machine électrique, qui prend en en compte le couple de la machine électrique. Par exemple, le contrôle de la machine électrique peut être basée sur une méthode de contrôle direct du couple (en anglais « direct torque control method ») performante, et particulièrement adaptée pour les machines électriques synchrones à pôles saillants. Il peut s'agir par exemple d'une stratégie de contrôle de type MTPA ou MTPV (respectivement de l'anglais « Maximum Torque per Ampere » pouvant être traduit par couple maximum par ampère, et « Maximum Torque per Voltage » pouvant être traduit par couple maximum par volt).

En outre, l'invention concerne un système de contrôle d'une machine électrique, notamment une machine électrique synchrone, adapté à appliquer le procédé tel que décrit ci-dessus. Un tel système de contrôle de machine électrique peut comprendre des moyens de contrôle de la machine électrique comportant des moyens de détermination du couple de la machine électrique et des moyens de contrôle du couple de la machine électrique. Les moyens de détermination du couple déterminent le couple de la machine électrique à partir des mesures de courants et de tensions. Il s'agit des courants et des tensions de chacune des trois phases de la machine électrique. Les moyens de contrôle du couple appliquent des tensions aux bornes de la machine électrique en fonction du couple afin d'assurer une consigne de couple pour la machine électrique. Avantageusement, le système de contrôle peut être un contrôleur comprenant des moyens informatiques.

Ce procédé et ce système de contrôle, peuvent être utilisés pour une machine électrique embarquée à bord d'un véhicule, notamment à bord d'un véhicule automobile électrique ou hybride. Toutefois, le système de commande décrit n'est pas limité à cette application et convient pour toutes les applications des machines électriques, y compris les applications stationnaires.

Comme il va de soi, l'invention ne se limite pas aux seules formes de réalisation du procédé, décrits ci-dessus à titre d'exemple, elle embrasse au contraire toutes les variantes de réalisation.

### Exemples d'application

Les caractéristiques et avantages du procédé selon l'invention apparaîtront plus clairement à la lecture des exemples d'application ci-après.

Les deux exemples concernent des tests expérimentaux pour une machine électrique synchro-réluctante assistée d'aimants permanents selon la conception décrite dans la demande de brevet FR3084536 (WO2020/020580). Pour ces deux exemples, on compare le couple de la machine électrique mesuré au couple de la machine électrique déterminé par le procédé selon l'invention.

La machine électrique utilisé possède les caractéristiques suivantes :
- nombre de paires de pôles : 4
- Résistance : 0,0065 Ohm
- Nombre de phases : 3
- Vitesse nominale de la machine électrique : 9000 tr/min
- Tension de bus : 350 V
- Fréquence de découpage : 12000 Hz.

Pour le premier exemple, le courant de référence est fixé à 400 A en mode de contrôle de courant (en d'autres termes l'amplitude du courant est imposée, et l'angle de courant est automatiquement calculé pour maximiser le couple), et on fait varier la vitesse de rotation de la machine électrique de 500 tr/min à 9000 tr/min.

La figure 3 illustre pour cet exemple :
- En haut à gauche, la courbe de l'amplitude du courant l_{abs} en A en fonction du temps T en s, qui correspond au courant imposé,
- En haut à droite, la courbe de la vitesse de rotation mécanique du rotor ω en tr/min en fonction du T en s, qui est imposée,
- En bas à gauche, la courbe de l'angle de courant δᵢ en ° en fonction du temps T en s, cette valeur mesurée étant celle qui permet de maximiser le couple,
- En bas à droite, la courbe de l'amplitude de tension V_{abs} en V en fonction du temps T en s, qui est une valeur mesurée.

Au moyen de ces mesures, on applique le procédé selon l'invention et on détermine le couple de la machine électrique.

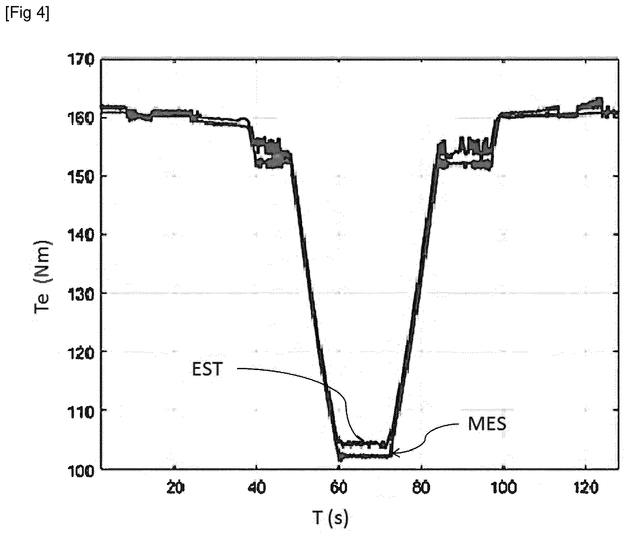

La figure 4 illustre pour cet exemple le couple Te en Nm, avec une première courbe correspondant au couple mesuré MES et une deuxième courbe correspondant au couple déterminé par le procédé selon l'invention EST. On remarque que les deux courbes sont quasiment superposées. Par conséquent, le procédé selon l'invention permet de déterminer le couple de la machine électrique de manière précise et robuste sur toute la plage de vitesse de rotation.

Pour le deuxième exemple, la vitesse de référence est fixée à 500 tr/min, et on fait varier l'amplitude de courant de la machine électrique de 100 A à 500 A. Pour cet essai, la machine électrique n'est pas en zone de défluxage.

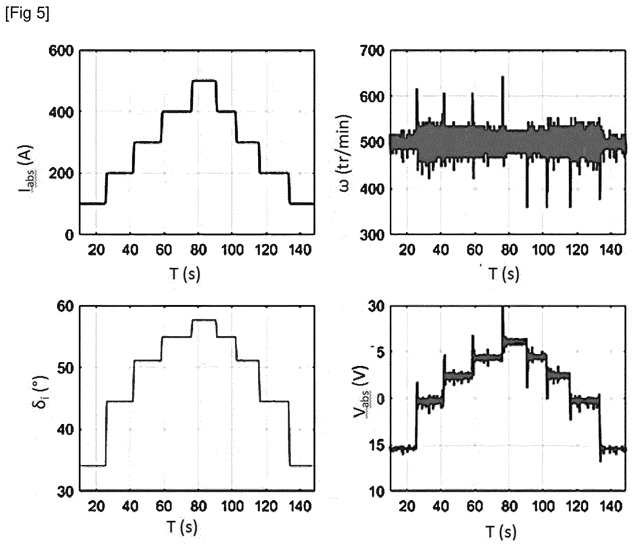

La figure 5 illustre pour cet exemple :
- En haut à gauche, la courbe de l'amplitude du courant l_{abs} en A en fonction du temps T en s, qui correspond au courant imposé,
- En haut à droite, la courbe de la vitesse de rotation du rotor mécanique ω en tr/min en fonction du T en s, qui est imposée,
- En bas à gauche, la courbe de l'angle de courant δᵢ en ° en fonction du temps T en s, cette valeur mesurée étant celle qui permet de maximiser le couple,
- En bas à droite, la courbe de l'amplitude de tension V_{abs} en V en fonction du temps T en s, qui est une valeur mesurée.

Au moyen de ces mesures, on applique le procédé selon l'invention et on détermine le couple de la machine électrique.

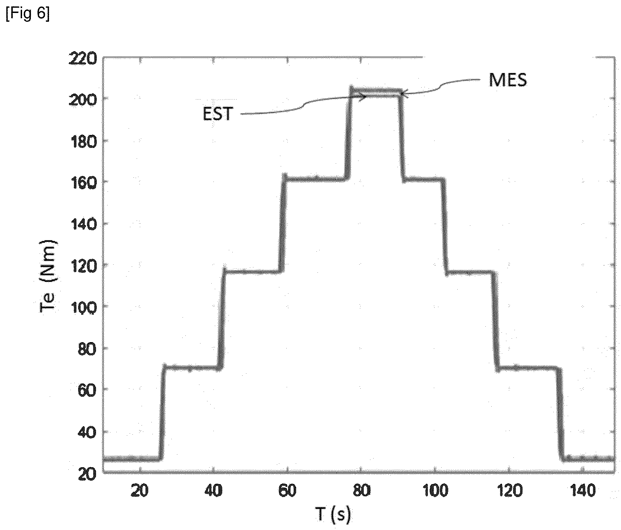

La figure 6 illustre pour cet exemple le couple Te en Nm, avec une première courbe correspondant au couple mesuré MES et une deuxième courbe correspondant au couple déterminé par le procédé selon l'invention EST. On remarque que les deux courbes sont quasiment superposées. Par conséquent, le procédé selon l'invention permet de déterminer le couple de la machine électrique de manière précise et robuste sur toute la plage de variation du courant.

## Revendications

1. Procédé de détermination du couple (Te) d'une machine électrique, ladite machine électrique comprenant un rotor, un stator, ledit stator comprenant des bobinages connectés à une pluralité de phases électriques, ledit procédé mettant en œuvre les étapes suivantes :
a. On mesure (MES) un courant et une tension dans lesdites phases de ladite machine électrique ;
b. On détermine une vitesse de rotation électrique dudit rotor, notamment en fonction d'une vitesse de rotation mécanique dudit rotor ;
c. On construit un modèle dynamique (MOD) dudit flux magnétique de ladite machine électrique, ledit modèle dynamique (MOD) dudit flux magnétique étant une équation différentielle dudit flux magnétique qui relie le flux magnétique au courant et à la tension desdites phases de la machine électrique, et à la vitesse de rotation électrique dudit rotor ; **caractérisé en ce que**
d. On détermine ledit flux magnétique en appliquant un filtre de Kalman sans parfum adaptatif (KAL) audit modèle dynamique (MOD) dudit flux magnétique, ledit modèle dynamique de flux magnétique étant appliqué aux mesures (MES) de courant et de tension et à la vitesse de rotation électrique déterminée, et unematrice de covariance du bruit du filtre de Kalman sans parfum étant dépendante de ladite vitesse de rotation électrique du rotor ; et
e. On détermine le couple (Te) de ladite machine électrique aux moyens desdites mesures (MES) de courant et au moyen dudit flux magnétique déterminé.

2. Procédé de détermination du couple d'une machine électrique selon la revendication 1, dans lequel on détermine ladite vitesse de rotation électrique ωₑ dudit rotor par une formule du type ωₑ=Nω avec N le nombre de paires de pôles de la machine électrique et w la vitesse de rotation mécanique dudit rotor.

3. Procédé de détermination du couple d'une machine électrique selon l'une des revendications précédentes, dans lequel ledit modèle dynamique (MOD) de flux magnétique s'écrit : $\left\{\begin{matrix}{\dot{ϕ}}_{d} \left(t\right) = - R \left(t\right) {I}_{d} \left(t\right) + {w}_{e} \left(t\right) {ϕ}_{q} \left(t\right) + {V}_{d} \left(t\right) \\ {\dot{ϕ}}_{q} \left(t\right) = - R \left(t\right) {I}_{q} \left(t\right) - {w}_{e} \left(t\right) {ϕ}_{q} \left(t\right) + {V}_{q} \left(t\right)\end{matrix}\right.$ avec R la résistance de la machine électrique, ωₑ la vitesse de rotation électrique, *ϕ_{d}* le flux magnétique direct, *ϕ_{q}* le flux magnétique en quadrature, *ϕ̇_{d}* la dérivée par rapport au temps du flux magnétique direct, *ϕ̇_{q}* la dérivée par rapport au temps du flux magnétique en quadrature, I_{d} le courant direct, I_{d} le courant en quadrature, V_{d} la tension directe, V_{q} la tension en quadrature.

4. Procédé de détermination du couple d'une machine électrique selon l'une des revendications précédentes, dans lequel on détermine ledit couple (Te) de la machine électrique au moyen de la formule : ${T}_{e} = \frac{3}{2} N \left({ϕ}_{d}{I}_{d}-{ϕ}_{q}{I}_{q}\right)$ avec *ϕ_{d}* le flux magnétique direct, *ϕ_{q}* le flux magnétique en quadrature, I_{d} le courant direct, I_{q} le courant en quadrature et N le nombre de paires de pôles de ladite machine électrique.

5. Procédé de détermination du couple d'une machine électrique selon l'une des revendications précédentes, dans lequel on applique ledit filtre de Kalman sans parfum adaptatif à l'équation d'état *ẋ*(*t*) = *A*(*t*)*x*(*t*) + *u*(*t*) avec $x \left(t\right) = \left[\left.\begin{matrix}{ϕ}_{d} \left(t\right) \\ {ϕ}_{q} \left(t\right)\end{matrix}\right|\right]$ correspondant à l'état non mesurable, avec *ϕ_{d}* le flux magnétique direct, *ϕ_{q}* le flux magnétique en quadrature, $u \left(t\right) = \left[\begin{matrix}{V}_{d} \left(t\right) - R \left(t\right) {I}_{d} \left(t\right) \\ {V}_{q} \left(t\right) - R \left(t\right) {I}_{q} \left(t\right)\end{matrix}\right]$ correspondant à l'entrée de ladite équation d'état, avec R la résistance de la machine électrique, I_{d} le courant direct, I_{q} le courant en quadrature, V_{d} la tension directe, V_{q} la tension en quadrature, et $A \left(t\right) = \left[\begin{matrix}0 & {w}_{e} \left(t\right) \\ - {w}_{e} \left(t\right) & 0\end{matrix}\right]$ avec ωₑ la vitesse de rotation électrique.

6. Procédé de détermination du couple d'une machine électrique selon la revendication 5, dans lequel une fonction qui relie les courants et le flux magnétique est une fonction non linéaire obtenue par une méthode des éléments finis.

7. Procédé de détermination du couple d'une machine électrique selon l'une des revendications précédentes, dans lequel on détermine ledit flux magnétique au moyen des étapes suivantes :
i. on initialise k=0, un vecteur d'état *x̂ₐ*(0|0) = m(0) et une matrice de covariance *P*(0|0) = *P*₀ *;*
ii. à chaque instant k différent de 0, on acquiert lesdites mesures, et on en déduit un vecteur de sortie y(k) ; et
iii. à chaque instant k différent de 0, on détermine ledit flux magnétique au moyen des équations suivantes : $\left\{\begin{matrix}K \left(k\right) = {P}_{xy} {P}_{yy}^{- 1} \\ x \left(\left.k\right|k\right) = x \left(\left.k\right|k-1\right) + K \left(k\right) \left(\left[\begin{matrix}{I}_{d} \left(k\right) , \\ {I}_{q} \left(k\right)\end{matrix}\right]-{m}_{y}\right) \\ P \left(\left.k\right|k\right) = P \left(\left.k\right|k-1\right) - K \left(k\right) {P}_{yy} K {\left(k\right)}^{T}\end{matrix}\right.$
avec K le gain du filtre de Kalman (KAL) sans parfum adaptatif, P_{xy} une covariance croisée dudit état et desdites mesures, P_{yy} la covariance prédite des mesures, m_{y} la moyenne prédite de la sortie, I_{d} le courant direct, I_{q} le courant en quadrature.

8. Procédé de détermination du couple d'une machine électrique selon l'une des revendications précédentes, dans lequel ladite machine électrique est une machine électrique synchrone à pôles saillants, de préférence une machine synchro-réluctante assistée d'aimants permanents.

9. Procédé de contrôle d'une machine électrique, **caractérisé en ce qu'**on met en œuvre les étapes suivantes :
a. On détermine le couple de ladite machine électrique au moyen du procédé de détermination dudit couple selon l'une des revendications précédentes ; et
b. On contrôle (CTRL) ladite machine électrique au moyen dudit couple déterminé.

10. Système de contrôle d'une machine électrique comprenant une machine électrique et un contrôleur pour mettre en œuvre le procédé de contrôle selon la revendication 9.

## Patentansprüche

1. Verfahren zur Bestimmung des Drehmoments (Te) einer elektrischen Maschine, wobei die elektrische Maschine einen Rotor, einen Stator umfasst, wobei der Stator Wicklungen umfasst, die an eine Mehrzahl von elektrischen Phasen angeschlossen sind, wobei das Verfahren die folgenden Schritte durchführt:
a. Man misst (MES) einen Strom und eine Spannung in den Phasen der elektrischen Maschine;
b. Man bestimmt eine elektrische Drehzahl des Rotors, insbesondere in Abhängigkeit von einer mechanischen Drehzahl des Rotors;
c. Man erstellt ein dynamisches Modell (MOD) des magnetischen Flusses der elektrischen Maschine, wobei das dynamische Modell (MOD) des magnetischen Flusses eine Differentialgleichung des magnetischen Flusses ist, die den magnetischen Fluss mit dem Strom und mit der Spannung der Phasen der elektrischen Maschine und mit der elektrischen Drehzahl des Rotors verknüpft;
**dadurch gekennzeichnet, dass**
d. Man den magnetische Fluss bestimmt, indem man ein adaptives Unscented Kalman-Filter (KAL) auf das dynamische Modell (MOD) des magnetischen Flusses anwendet, wobei das dynamische Modell des magnetischen Flusses auf die Messungen (MES) des Stroms und der Spannung und auf die bestimmte elektrische Drehzahl angewendet wird und wobei eine Kovarianzmatrix des Rauschens des Unscented Kalman-Filters von der elektrischen Drehzahl des Rotors abhängig ist; und
e. Man das Drehmoment (Te) der elektrischen Maschine mittels der Messungen (MES) des Stroms und mittels des bestimmten magnetischen Flusses bestimmt.

2. Verfahren zur Bestimmung des Drehmoments einer elektrischen Maschine nach Anspruch 1, bei dem man die elektrische Drehzahl ωₑ des Rotors durch eine Formel des Typs ωₑ=Nω bestimmt, wobei N die Polpaarzahl der elektrischen Maschine ist und ω die mechanische Drehzahl des Rotors ist.

3. Verfahren zur Bestimmung des Drehmoments einer elektrischen Maschine nach einem der vorhergehenden Ansprüche, bei dem das dynamische Modell (MOD) des magnetischen Flusses lautet: $\left\{\begin{matrix}{\dot{ϕ}}_{d} \left(t\right) & = - R \left(t\right) {I}_{d} \left(t\right) + {w}_{e} \left(t\right) {ϕ}_{q} \left(t\right) + {V}_{d} \left(t\right) \\ {\dot{ϕ}}_{q} \left(t\right) & = - R \left(t\right) {I}_{q} \left(t\right) - {w}_{e} \left(t\right) {ϕ}_{q} \left(t\right) + {V}_{q} \left(t\right)\end{matrix}\right.$ wobei R der Widerstand der elektrischen Maschine ist, ωₑ die elektrische Drehzahl ist, ϕ_{d} der direkte magnetische Fluss ist, ϕ_{q} der magnetische Fluss in Quadratur ist, ϕ̇_{d} die Ableitung bezogen auf die Zeit des direkten magnetischen Flusses ist, ϕ̇_{q} die Ableitung bezogen auf die Zeit des magnetischen Flusses in Quadratur ist, I_{d} der Direktstrom ist, I_{q} der Quadraturstrom, V_{d} die Direktspannung ist, V_{q} die Quadraturspannung ist.

4. Verfahren zur Bestimmung des Drehmoments einer elektrischen Maschine nach einem der vorhergehenden Ansprüche, bei dem man das Drehmoment (Te) der elektrischen Maschine mittels der folgenden Formel bestimmt: ${T}_{e} = \frac{3}{2} N \left({ϕ}_{d}{I}_{d}-{ϕ}_{q}{I}_{q}\right)$, wobei ϕ_{d} der direkte magnetische Fluss ist, ϕ_{q} der magnetische Fluss in Quadratur ist, I_{d} der Direktstrom ist, I_{q} der Quadraturstrom ist und N die Polpaarzahl der elektrischen Maschine ist.

5. Verfahren zur Bestimmung des Drehmoments einer elektrischen Maschine nach einem der vorhergehenden Ansprüche, bei dem man das adaptive Unscented Kalman-Filter auf die Zustandsgleichung *x*(*t*) = *A*(*t*)*x*(*t*) + *u*(*t*) anwendet, wobei $x \left(t\right) = \left[\begin{matrix}{ϕ}_{d} \left(t\right) \\ {ϕ}_{q} \left(t\right)\end{matrix}\right]$ dem nicht messbaren Zustand entspricht, wobei ϕ_{d} der direkte magnetische Fluss ist, ϕ_{q} der magnetische Fluss in Quadratur ist, $u \left(t\right) = \left[\begin{matrix}{V}_{d} \left(t\right) - R \left(t\right) {I}_{d} \left(t\right) \\ {V}_{q} \left(t\right) - R \left(t\right) {I}_{q} \left(t\right)\end{matrix}\right]$ dem Eingang der Zustandsgleichung entspricht, wobei R der Widerstand der elektrischen Maschine ist, I_{d} der Direktstrom ist, I_{q} der Quadraturstrom ist, V_{d} die Direktspannung ist, V_{q} die Quadraturspannung ist, und $A \left(t\right) = \left[\begin{matrix}0 & {w}_{e} \left(t\right) \\ - {w}_{e} \left(t\right) & 0\end{matrix}\right]$, wobei ωₑ die elektrische Drehzahl ist.

6. Verfahren zur Bestimmung des Drehmoments einer elektrischen Maschine nach Anspruch 5, bei dem eine Funktion, die die Ströme und den magnetischen Fluss verknüpft, eine nichtlineare Funktion ist, die durch eine Finite-Elemente-Methode erhalten wird.

7. Verfahren zur Bestimmung des Drehmoments einer elektrischen Maschine nach einem der vorhergehenden Ansprüche, bei dem der magnetische Fluss mittels der folgenden Schritte bestimmt wird:
i. man initialisiert k=0, einen Zustandsvektor x̂ₐ(0|0) = m(0) und eine Kovarianzmatrix P(0|0) = P₀;
ii. man erfasst zu jedem von 0 verschiedenen Zeitpunkt k die Messungen und man leitet daraus einen Ausgangsvektor y(k) ab; und
iii. man bestimmt zu jedem von 0 verschiedenen Zeitpunkt k den magnetischen Fluss mittels der folgenden Gleichungen: $\left\{\begin{matrix}K \left(k\right) = {P}_{xy} {P}_{yy}^{- 1} \\ x \left(\left.k\right|k\right) = x \left(\left.k\right|k-1\right) + K \left(k\right) \left(\left[\begin{matrix}{I}_{d} \left(k\right) , \\ {I}_{q} \left(k\right)\end{matrix}\right]-{m}_{y}\right) \\ P \left(\left.k\right|k\right) = P \left(\left.k\right|k-1\right) - K \left(k\right) {P}_{yy} K {\left(k\right)}^{T}\end{matrix}\right.$
wobei K die Verstärkung des adaptiven Unscented Kalman-Filters (KAL) ist, P_{xy} eine Kreuzkovarianz des Zustands und der Messungen ist, P_{yy} die vorhergesagte Kovarianz der Messungen ist, m_{y} der vorhergesagte Mittelwert des Ausgangs ist, I_{d} der Direktstrom ist, I_{q} der Quadraturstrom ist.

8. Verfahren zur Bestimmung des Drehmoments einer elektrischen Maschine nach einem der vorhergehenden Ansprüche, bei dem die elektrische Maschine eine elektrische Synchron-Schenkelpolmaschine, vorzugsweise eine permanentmagnetunterstützte Synchron-Reluktanzmaschine ist.

9. Steuerungsverfahren für eine elektrische Maschine, **dadurch gekennzeichnet, dass** man die folgenden Schritte durchführt:
a. Man bestimmt das Drehmoment der elektrischen Maschine mittels des Verfahrens zur Bestimmung des Drehmoments nach einem der vorhergehenden Ansprüche; und
b. Man steuert (CTRL) die elektrische Maschine mittels des bestimmten Drehmoments.

10. System zur Steuerung einer elektrischen Maschine, umfassend eine elektrische Maschine und eine Steuerung zur Durchführung des Steuerungsverfahrens nach Anspruch 9.

## Claims

1. Method for determining the torque (Te) of an electric machine, said electric machine comprising a rotor and a stator, said stator comprising windings connected to a plurality of electrical phases, said method implementing the following steps:
a. measuring (MES) a current and a voltage in said phases of said electric machine;
b. determining an electrical rotational speed of said rotor, in particular on the basis of a mechanical rotational speed of said rotor;
c. constructing a dynamic model (MOD) of said magnetic flux of said electric machine, said dynamic model (MOD) of said magnetic flux being a differential equation of said magnetic flux that relates the magnetic flux to the current and to the voltage of said phases of the electric machine and to the electrical rotational speed of said rotor;
**characterized in that**
d. said magnetic flux is determined by applying an adaptive unscented Kalman filter (KAL) to said dynamic model (MOD) of said magnetic flux, said dynamic magnetic flux model being applied to the current and voltage measurements (MES) and to the determined electrical rotational speed, and a covariance matrix of the noise of the unscented Kalman filter being dependent on said electrical rotational speed of the rotor; and
e. the torque (Te) of said electric machine is determined by means of said current measurements (MES) and by means of said determined magnetic flux.

2. Method for determining the torque of an electric machine according to Claim 1, wherein said electrical rotational speed ωₑ of said rotor is determined using a formula of the type ωₑ=Nω, where N is the number of pole pairs of the electric machine and ω is the mechanical rotational speed of said rotor.

3. Method for determining the torque of an electric machine according to either of the preceding claims, wherein said dynamic magnetic flux model (MOD) is written as follows: $\left\{\begin{matrix}{\dot{ϕ}}_{d} \left(t\right) & = - R \left(t\right) {I}_{d} \left(t\right) + {w}_{e} \left(t\right) {ϕ}_{q} \left(t\right) + {V}_{d} \left(t\right) \\ {\dot{ϕ}}_{q} \left(t\right) & = - R \left(t\right) {I}_{q} \left(t\right) - {w}_{e} \left(t\right) {ϕ}_{q} \left(t\right) + {V}_{q} \left(t\right)\end{matrix}\right.$ where R is the resistance of the electric machine, ωₑ is the electrical rotational speed, ϕ_{d} is the direct magnetic flux, ϕ_{q} is the quadrature magnetic flux, ϕ̇_{d} is the time derivative of the direct magnetic flux, ϕ̇_{q} is the time derivative of the quadrature magnetic flux, l_{d} is the direct current, l_{q} is the quadrature current, V_{d} is the direct voltage, V_{q} is the quadrature voltage.

4. Method for determining the torque of an electric machine according to one of the preceding claims, wherein said torque (Te) of the electric machine is determined by means of the following formula: ${T}_{e} = \frac{3}{2} N \left({ϕ}_{d}{I}_{d}-{ϕ}_{q}{I}_{q}\right)$ where ϕ_{d} is the direct magnetic flux, ϕ_{q} is the quadrature magnetic flux, l_{d} is the direct current, l_{q} is the quadrature current and N is the number of pole pairs of said electric machine.

5. Method for determining the torque of an electric machine according to one of the preceding claims, wherein said adaptive unscented Kalman filter is applied to the state equation *ẋ(t) = A(t)x(t) + u(t)* where $x \left(t\right) = \left[\begin{matrix}{ϕ}_{d} \left(t\right) \\ {ϕ}_{q} \left(t\right)\end{matrix}\right]$ corresponds to the non-measurable state, where ϕ_{d} is the direct magnetic flux, ϕ_{q} is the quadrature magnetic flux, $u \left(t\right) = \left[\begin{matrix}{V}_{d} \left(t\right) - R \left(t\right) {I}_{d} \left(t\right) \\ {V}_{q} \left(t\right) - R \left(t\right) {I}_{q} \left(t\right)\end{matrix}\right]$ corresponding to the input of said state equation, where R is the resistance of the electric machine, l_{d} is the direct current, l_{q} is the quadrature current, V_{d} is the direct voltage, V_{q} is the quadrature voltage, and $A \left(t\right) = \left[\begin{matrix}0 & {w}_{e} \left(t\right) \\ - {w}_{e} \left(t\right) & 0\end{matrix}\right]$ where ωₑ is the electrical rotational speed.

6. Method for determining the torque of an electric machine according to Claim 5, wherein a function that relates the currents and the magnetic flux is a nonlinear function obtained using a finite element method.

7. Method for determining the torque of an electric machine according to one of the preceding claims, wherein said magnetic flux is determined by means of the following steps:
i. initializing k=0, a state vector x̂ₐ(0|0) = m(0) and a covariance matrix P(0|0) = P₀ ;
ii. at each time k other than 0, acquiring said measurements, and deducing therefrom an output vector y(k); and
iii. at each time k other than 0, determining said magnetic flux by means of the following equations: $\left\{\begin{matrix}K \left(k\right) = {P}_{xy} {P}_{yy}^{- 1} \\ x \left(\left.k\right|k\right) = x \left(\left.k\right|k-1\right) + K \left(k\right) \left(\left[\begin{matrix}{I}_{d} \left(k\right) , \\ {I}_{q} \left(k\right)\end{matrix}\right]-{m}_{y}\right) \\ P \left(\left.k\right|k\right) = P \left(\left.k\right|k-1\right) - K \left(k\right) {P}_{yy} K {\left(k\right)}^{T}\end{matrix}\right.$
where K is the gain of the adaptive unscented Kalman filter (KAL), P_{xy} is a cross-covariance of said state and said measurements, P_{yy} is the predicted covariance of the measurements, m_{y} is the predicted mean of the output, l_{d} is the direct current, l_{q} is the quadrature current.

8. Method for determining the torque of an electric machine according to one of the preceding claims, wherein said electric machine is a salient-pole synchronous electric machine, preferably a permanent magnet-assisted synchronous reluctance machine.

9. Method for controlling an electric machine, **characterized in that** the following steps are implemented:
a. determining the torque of said electric machine by means of the method for determining said torque according to one of the preceding claims; and
b. controlling (CTRL) said electric machine by means of said determined torque.

10. System for controlling an electric machine, comprising an electric machine and a controller for implementing the control method according to Claim 9.
